# EUROPÄISCHE PATENTANMELDUNG

(11) **EP 1 612 440 A1**
(43) Veröffentlichungstag der Anmeldung: **04.01.2006**
(21) Anmeldenummer: 04015316.5
(22) Anmeldetag: 30.06.2004
(51) Int. Cl.: F16D 13/64, F16D 55/36

(54) **Zwei- oder mehrstufige Lamellenkupplung**

(71) Anmelder: BorgWarner Inc., Auburn Hills MI 48326 (US)
(72) Erfinder: Günter, Frank, Dr., 76228 Karlsruhe (DE); Weiss, Robert, Dr., 85221 Dachau (DE); Tapper, Steve, Castle Hill NSW 2154 (AU)
(74) Vertreter: Patentanwälte Westphal, Mussgnug & Partner

(57) **Zusammenfassung**

Die Erfindung betrifft ein Kraftübertragungsaggregat, zum Beispiel eine Lamellenkupplung oder eine Reibbremse, mit mindestens einem Lamellenpaket, bestehend aus axial hintereinander angeordneten äußeren und inneren Lamellen. Der Erfindung liegt die Aufgabe zugrunde, ein Kraftübertragungsaggregat vorzuschlagen, mit dem eine optimierte Regelung des übertragenen Drehmoments, insbesondere im Bereich geringer Drehmomente, möglich ist. Diese Aufgabe wird dadurch gelöst dass das Mittel (8) zum stufenweisen Aneinanderpressen einzelner Lamellen (3a, 3b, 5a, 5b) oder Gruppen (3a, 5a) von Lamellen (5a, 5b) des Lamellenpaketes (1) vorgesehen sind.

## Beschreibung

Die Erfindung betrifft ein Kraftübertragungsaggregat, z.B. eine Lamellenkupplung oder eine Reibbremse, mit mindestens einem Lamellenpaket, bestehend aus axial hintereinander angeordneten äußeren und inneren Lamellen.

Derartige Lamellenkupplungen umfassen eine Mehrzahl von Lamellen. Dabei sind äußere Lamellen auf einem äußeren Lamellenträger drehfest angeordnet. Innere Lamellenträger sind drehfest auf einem inneren Lamellenträger angeordnet. Die äußeren und inneren Lamellen greifen dabei verzahnungsartig ineinander. Die äußeren und inneren Lamellen sind in axialer Richtung zueinander verschiebbar und dabei in reibschlüssige Verbindung bringbar. Bei den zur Anwendung kommenden Lamellen wird in der Regel zwischen Reiblamellen mit einseitigem oder zweiseitigem Reibbelag sowie Stahllamellen unterschieden. Bei einer möglichen Ausgestaltungsvariante von Lamellenkupplungen sind einseitige Reiblamellen axial hintereinander angeordnet, wobei jeweils der Reibbelag einer Reiblamelle mit der Stahlseite einer benachbarten Reiblamelle in Kontakt bringbar ist. Bei einer anderen Ausgestaltungsvariante sind ein- oder zweiseitig mit Reibbelag bestückte Reiblamellen mit einer Stahllamelle in Reibkontakt bringbar.

Ein solches Kraftübertragungsaggregat ist beispielsweise aus der DE 199 57 511 A1 bekannt. Nachteilig bei der bekannten Lamellenkupplung ist, dass insbesondere bei der Regelung des übertragenen Drehmoments im Bereich kleiner Drehmomente regelungstechnische Schwierigkeiten auftreten können. Die Regelung des übertragenen Drehmoments erfolgt ausschließlich über die Größe der Anpresskraft. Hierdurch kann es zu Totzeiten, Hysteresen, etc. im System kommen, was dazu führt, dass insbesondere kleine Drehmomente nur unsauber einzuregeln sind.

Der.Erfindung liegt die Aufgabe zugrunde, ein Kraftübertragungsaggregat vorzuschlagen, mit dem eine optimierte Regelung des übertragenen Drehmoments, insbesondere im Bereich geringer Drehmomente, möglich ist. Weiterhin ist es Aufgabe der Erfindung, ein Verfahren zur verbesserten Regelung des übertragenen Drehmoments, insbesondere im Bereich geringer Drehmomente, vorzuschlagen.

Die der Erfindung zugrunde liegenden Aufgaben werden durch die Merkmale der Ansprüche 1 und 7 gelöst.

Durch die erfindungsgemäße Ausgestaltung des Kraftübertragungsaggregats ist es erstmals möglich, nur einen Teil der Drehmomentkapazität der Kupplung auszunutzen und somit die Anpresskraft-Drehmomentkurve deutlich abzuflachen.

Je nach Anwendungsfall kann das Kraftübertragungsaggregat zwei- oder mehrstufig ausgebildet werden. Bei einer zweistufigen Ausbildung des Kraftübertragungsaggregates muss zunächst eine erste axiale Anpressgrenzkraft überwunden werden, damit eine erste Gruppe von benachbarten Lamellen in axialer Richtung aneinander gepresst wird. Diese erste axiale Grenzkraft ist üblicherweise sehr gering und entspricht im Wesentlichen der Kraft, die notwendig ist um den Reibwiderstand in axialer Richtung zu überwinden. Dadurch, dass zunächst nur eine erste Gruppe von Lamellen in Reibverbindung zueinander gelangt, ist die Anpresskraft-Drehmomentkurve relativ flach. Diese Abflachung wirkt bis zu einer zweiten Grenzkraft, bei deren Überwindung dann die verbleibenden Lamellen zur Anlage kommen. Dabei ist es möglich, dass die verbleibenden Lamellen an den bereits zusammengepressten Lamellen zur Anlage kommen, oder dass nur eine Anpressung der Lamellen der zweiten Gruppe-untereinander erfolgt. Bei einer zweistufigen Ausbildung des Lamellenpaketes ist bei Überschreitung der zweiten Grenzkraft wieder die volle Drehmomentkapazität der Kupplung vorhanden und somit die Anpresskraft-Drehmomentkurve steiler. Diesen Effekt kann man beispielsweise für die feine Regelung des Kriechmomentes in einer Anfahrkupplung für Fahrzeuge nutzen.

Für eine noch feinstufigere Regelung des übertragenen Drehmoments eignet sich insbesondere ein Kraftübertragungsaggregat mit einem mehrstufig ausgebildeten Lamellenpaket. Pro zusätzlicher Stufe muss hierbei eine zusätzliche Grenzkraft überwunden werden um weitere Lamellen in Reibkontakt zueinander zu bringen.

In Ausgestaltung der Erfindung ist mit Vorteil vorgesehen, dass als Mittel zum stufenweisen Aneinanderpressen zumindest zwischen zwei benachbarten äußeren Lamellen und/oder zwischen zwei benachbarten inneren Lamellen Abstandsfederelemente, insbesondere Wellfedern, vorgesehen sind. Bei einer zweistufigen Ausbildung sind die Abstandsfederelemente in der Regel nur bei einer Gruppe von Lamellen vorgesehen. Sollten bei beiden Gruppen von Lamellen Abstandsfederelemente vorgesehen sein, so müssen die Abstandsfederelemente der beiden Gruppen von Lamellen unterschiedliche Federkennlinien aufweisen. Die zu überwindenden Grenzkräfte können durch eine geeignete Wahl der Abstandfederelemente festgelegt werden.

Bei mehrstufig ausgestalteten Kraftübertragungsaggregaten sollte darauf geachtet werden, dass Gruppen von Abstandsfederelementen mit in etwa der selben Federkennlinie innerhalb der jeweiligen Gruppe vorgesehen sind, wobei die Abstandsfederelemente unterschiedlicher Gruppen eine unterschiedliche Federkennlinien aufweisen.

Mit Vorteil ist vorgesehen, dass zumindest zwischen zwei benachbarten Lamellen oder zwei Gruppen von benachbarten Lamellen Vorspannmittel zum definierten Vorspannen der Abstandsfederelemente vorgesehen sind. Hierfür eignet sich insbesondere ein Sicherungsring am inneren oder'äußeren Lamellenträger. Der Sicherungsring grenzt dabei die axiale Verschiebbarkeit der Lamellen ein. Durch Wahl der Stärke der Vorspannung kann jeder beliebige Punkt auf der Federkennlinie der Abstandsfederelemente voreingestellt werden.

Die Erfindung ist anhand der Zeichnungen erläutert. Darin ist im Einzelnen folgendes dargestellt:
- Fig. 1: zeigt in einem achsparallelen Schnitt einen Ausschnitt eines Lamellenpaketes einer Lamellenkupplung mit Sicherungsring,
- Fig. 2: zeigt in einem achsparallelen Schnitt einen Ausschnitt eines Lamellenpaketes einer Lamellenkupplung ohne Sicherungsring,
- Fig. 3: zeigt ein Anpress-Drehmomentdiagramm eines zweistufigen Lamellenpaketes und
- Fig. 4: zeigt ein Anpresskraft-Drehmomentdiagramm eines mehrstufigen Lamellenpaketes.

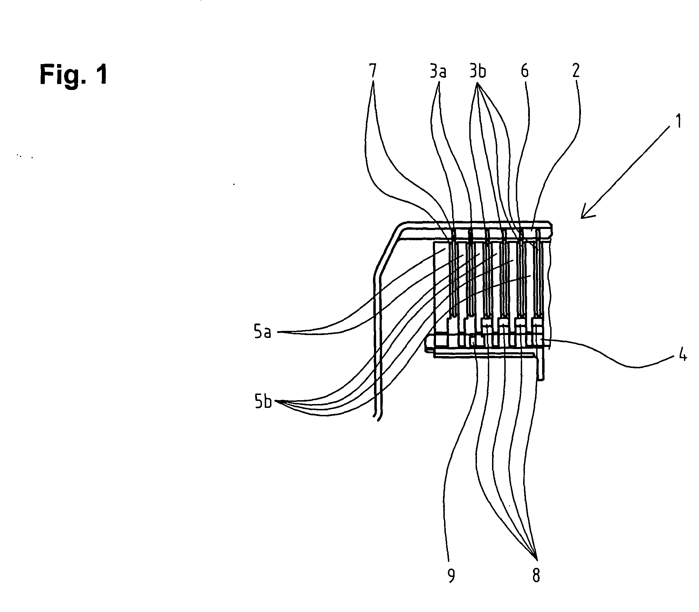

In Fig. 1 ist ein Ausschnitt eines Lamellenpaketes 1 einer Lamellenkupplung dargestellt. Eine nicht dargestellte Antriebswelle ist mit einem äußeren Lamellenträger (2) drehfest verbunden. Der äußere Lamellenträger (2) trägt eine Mehrzahl von Außenlamellen (3a, 3b). Ein innerer Lamellenträger (4) trägt eine Mehrzahl von Innenlamellen (5a, 5b). In dem Ausführungsbeispiel sind die Innenlamellen (5a, 5b) als Stahllamellen ausgebildet. Die Außenlamellen (3) sind als sandwichartig aufgebaute Reiblamellen ausgestaltet. Sie umfassen jeweils ein Trägerblech (6) welches auf seinen Ringflächen einen Reibbelag (7) aufweist. Die Außenlamellen (3a, 3b) und die Innenlamellen (5a, 5b) greifen verzahnungsartig ineinander und sind in axialer Richtung relativ zueinander verschiebbar.

Das dargestellte Lamellenpaket (1) ist zweistufig aufgebaut. Das bedeutet, dass zwei Gruppen von Lamellen (3a, 5a) und (3b, 5b) stufenweise nacheinander aneinander angepresst werden. Um dies zu gewährleisten sind zwischen den Innenlamellen (5b) rund um den inneren Lamellenträger (4) als Wellfedern ausgestaltete Abstandsfederelemente (8) vorgesehen. Alle Abstandsfederelemente (8) der Gruppe von Lamellen (3b, 5b) weisen in etwa die gleiche Federkennlinie auf. Die Abstandsfederelemente (8) sind zwischen einen Sicherungsring (9) und einer nicht dargestellten Endscheibe oder einem weiteren Sicherungsring vorgespannt. Dies trägt zur besseren Abstimmbarkeit des Kupplungsverhaltens bei.

Wird nun beispielsweise durch einen nicht dargestellten Druckkolben eine Axialkraft auf ein Lamellenpaket aufgebracht, die größer ist als eine erste Axialgrenzkraft, so bewegen sich zunächst die erste Gruppe von Lamellen (3a, 5a) aufeinander zu und werden aneinander gepresst. Je größer die gewählte Axialkraft ist, desto größer ist das übertragene Drehmoment. Überschreitet die axiale Anpresskraft eine zweite Anpressgrenzkraft, so werden auch die weiteren Lamellen (3b, 5b) aneinander gepresst. Bei der zweistufigen Ausbildung ist nun die volle Drehmomentkapazität der Kupplung vorhanden und die entsprechende Anpresskraft-Drehmomentkurve ist steiler.

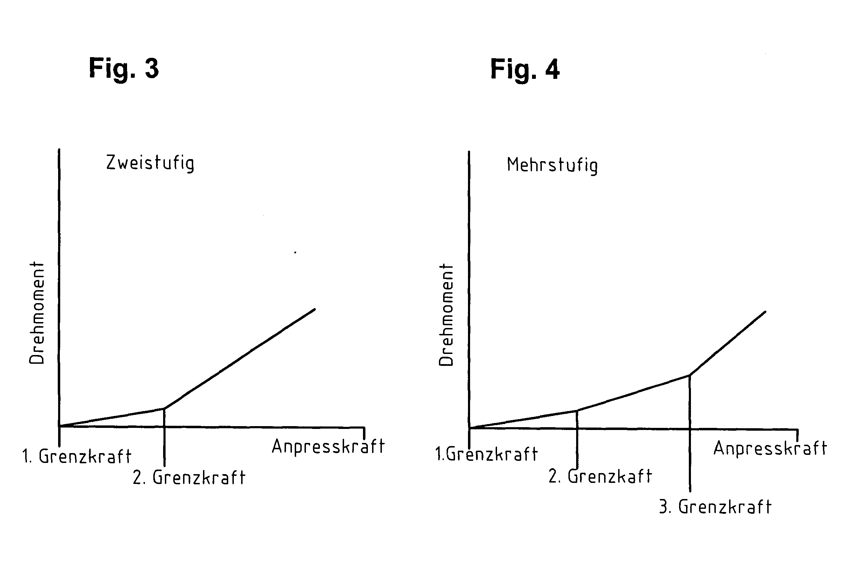

Eine entsprechende Anpresskraft-Drehmomentkurve ist in Fig. 3 dargestellt. Wie aus dem Diagramm zu entnehmen ist, ist die erste zu überwindende Grenzkraft vernachlässigbar gering. Diese entspricht im Wesentlichen nur den zu überwindenden Reibwiderstand bei axialer Verschiebung der Lamellen (3a, 5a). Bis zum Erreichen einer zweiten Anpressgrenzkraft ist die Anpresskraft-Drehmomentkurve flach, weist also nur eine geringe Steigung auf. Überschreitet die axiale Anpresskraft eine zweite Anpressgrenzkraft ist die volle Drehmomentkapazität der Kupplung vorhanden und die Anpresskraft-Drehmomentkurve ist steiler. Durch die erfindungsgemäße Ausgestaltung der Kraftübertragungsvorrichtung ist es möglich, Kraftübertragungsaggregate, die für hohe Drehmomente ausgelegt sind, auch bei kleineren Drehmomenten besser regeln zu können.

Das in Fig. 1 dargestellte Prinzip eines zweistufigen Lamellenpaketes kann beliebig erweitert werden, wenn weitere, nicht dargestellte Gruppen von Innen- und Außenlamellen in axialer Richtung eingefügt werden, wobei die Abstandsfederelemente einer Gruppe in etwa dieselbe Federkennlinie aufweisen sollten, wobei die Abstandsfederelemente unterschiedlicher Gruppen von Lamellen unterschiedliche Federkennlinien aufweisen sollten. Selbstverständlich können auch nur einzelne Lamellen mit Abstandsfederelementen angefügt werden.

In Fig. 4 ist ein Anpresskraft-Drehmomentdiagramm eines mehrstufigen Lamellenpaketes dargestellt. Auch hier ist die erste Anpressgrenzkraft zu vernachlässigen. Bei Überschreiten einer zweiten Anpressgrenzkraft wird eine weitere Lamelle oder eine weitere Gruppe von Lamellen in Anpressung gebracht, wodurch sich die Steigung der Anpresskraft-Drehmomentkurve erhöht. Zu einer weiteren Steigungserhöhung kommt es nach dem Überschreiten einer dritten Anpressgrenzkraft.

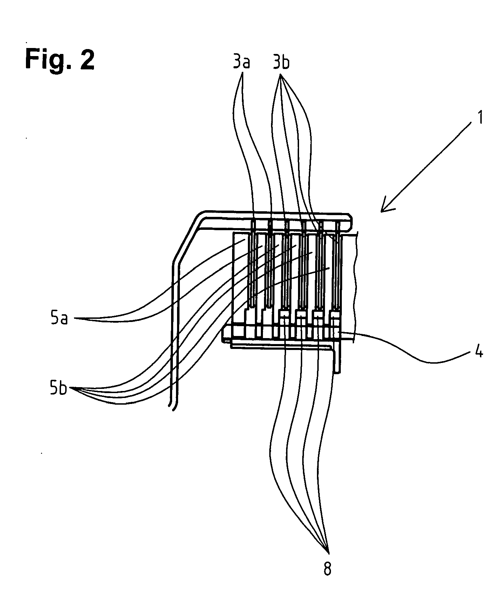

In Fig. 2 ist ein Ausschnitt eines Lamellenpaketes 1 mit Außenlamellen (3a, 3b) sowie Innenlamellen (5a, 5b) dargestellt. Zwischen einer ersten Gruppe von Lamellen (3a, 5a) und (3b, 5b) ist in diesem Ausführungsbeispiel kein Sicherungsring vorgesehen. Die Kupplung ist trotzdem voll funktionsfähig. Zwischen den Innenlamellen (5b) sind Abstandsfederelemente (8) vorgesehen. Dies hat zur Folge, dass zunächst bei Überschreiten einer ersten Anpressgrenzkraft die Lamellen (3a, 5a) aneinandergepresst werden. Bei Überschreiten einer zweiten Axialgrenzkraft werden dann sämtliche Lamellen (3a, 3b, 5a, 5b) aneinandergepresst. Der Unterschied der in Fig. 2 dargestellten Ausführungsform gegenüber der in Fig. 1 dargestellten Ausführungsform besteht darin, dass die Abstandsfederelemente (8) auf Grund des Fehlen eines Sicherungsrings nicht vorgespannt werden können. Das Vorsehen eines Sicherungsrings (9) erleichtert die Abstimmung der Kupplung.

Selbstverständlich ist die Erfindung mit allen möglichen Arten von Lamellen, beispielsweise auch mit Reiblamellen mit einseitigem Reibbelag ausführbar oder derart, dass die Reiblamellen innenverzahnt und die Stahllamellen außenverzahnt ausgebildet sind.

### Bezugszeichenliste

1) Lamellenpaket
2) äußerer Lamellenträger
3a), 3b) Außenlamellen
4) innerer Lamellenträger
5a), 5b) Innenlamellen
6) Trägerblech
7) Reibbelag
8) Abstandsfederelemente
9) Sicherungsring

## Patentansprüche

1. Kraftübertragungsaggregat, zum Beispiel eine Lamellenkupplung oder eine Reibbremse, mit mindestens einem Lamellenpaket, bestehend aus axial hintereinander angeordneten äußeren und inneren Lamellen,
**dadurch gekennzeichnet**, das Mittel (8) zum stufenweisen Aneinanderpressen einzelner Lamellen (3a, 3b, 5a, 5b) oder Gruppen (3a, 5a) von Lamellen (5a,5b) des Lamellenpaketes (1) vorgesehen sind.

2. Kraftübertragungsaggregat nach Anspruch 1,
**dadurch gekennzeichnet, dass** als Mittel (8) zum stufenweisen Aneinanderpressen zumindest zwischen zwei benachbarten äußeren Lamellen und/oder zwischen zwei benachbarten inneren Lamellen Abstandsfederelemente (8), insbesondere Wellfedern, vorgesehen sind.

3. Kraftübertragungsaggregat nach Anspruch 2
**dadurch gekennzeichnet, dass** Abstandsfederelemente (8) mit unterschiedlichen Federkennlinien vorgesehen sind.

4. Kraftübertragungsaggregat nach Anspruch 3,
**dadurch gekennzeichnet, dass** Gruppen von Abstandsfederelementen (8) mit in etwa derselben Federkennlinie innerhalb der Gruppe vorgesehen sind,
wobei die Abstandsfederelemente unterschiedlicher Gruppen eine unterschiedliche Federkennlinie aufweisen.

5. Kraftübertragungsaggregat nach einem der vorhergehenden Ansprüche,
**dadurch gekennzeichnet, dass** zumindest zwischen zwei Gruppen (3a, 5a) von Lamellen (3b, 5b) Vorspannmittel (9) zum definierten Vorspannen der Abstandsfederelemente (8) vorgesehen sind.

6. Kraftübertragungsaggregat nach Anspruch 5,
**dadurch gekennzeichnet, dass** als Vorspannmittel (9) mindestens ein Sicherungsring vorgesehen ist.

7. Verfahren zur Regelung des übertragenen Drehmoments eines Kraftübertragungsaggregates, zum Beispiel einer Lamellenkupplung oder einer Reibbremse, mit mindestens einem Lamellenpaket bestehend aus mindestens drei axial hintereinander angeordneten Lamellen,
**dadurch gekennzeichnet, dass** das Aneinanderpressen von Lamellen oder Gruppen von Lamellen des Lamellenpakets (1) stufenweise erfolgt.

8. Verfahren nach Anspruch 5,
**dadurch gekennzeichnet , dass** das Aneinanderpressen zumindest zweistufig erfolgt, wobei zunächst zumindest zwei benachbarte Lamellen bei überschreiten einer ersten axialen Anpressgrenzkraft aneinander gepresst werden und dass bei überschreiten einer zweiten axialen Anpressgrenzkraft zumindest eine weitere Lamelle an die bereits aneinandergepressten Lamellen gepresst wird oder dass bei überschreiten der zweiten Anpressgrenzkraft zumindest zwei weitere benachbarte Lamellen aneinander gepresst werden.

9. Verfahren nach Anspruch 6,
**dadurch gekennzeichnet, dass** das Aneinanderpressen mehrstufig erfolgt, wobei zunächst bei überschreiten einer ersten axialen Anpressgrenzkraft zumindest zwei Lamellen oder Gruppen von Lamellen aneinandergepresst werden und dass bei Überschreiten weiterer Grenzkräfte zumindest jeweils eine weitere Lamelle an bereits aneinandergepressten Lamellen gepresst wird oder dass bei überschreiten weiterer axialer Grenzkräfte jeweils zumindest zwei weitere benachbarte Lamellen aneinander gepresst werden.
